# FASCICULE DE BREVET EUROPEEN

(11) **EP 3 568 684 B1**
(45) Date de publication et mention de la délivrance du brevet: **24.07.2024**
(21) Numéro de dépôt: 18700157.3
(22) Date de dépôt: 10.01.2018
(51) Int. Cl.: G01M 3/28, G01M 3/32, A62C 5/02, A62C 99/00

(54) **INSTALLATION ET PROCEDE DESTINES A REPANDRE LE MELANGE D'UN LIQUIDE ET D'UN PREMIER FLUIDE**
VORRICHTUNG UND VERFAHREN ZUR VERTEILUNG EINER MISCHUNG AUS EINER FLÜSSIGKEIT UND EINER ERSTEN FLÜSSIGKEIT
APPARATUS AND METHOD FOR SPREADING A MIXTURE OF A LIQUID AND A FIRST FLUID

(30) Priorité: 10.01.2017 FR 1750204
(43) Date de publication de la demande: 20.11.2019
(73) Titulaire: Suez International, 92040 Paris La Défense Cedex (FR)
(72) Inventeur: ISSARTEL, Eric, 86210 Vouneuil-Sur-Vienne (FR)
(74) Mandataire: Fédit-Loriot
(86) Numéro de dépôt international: PCT/EP2018/050555
(87) Numéro de publication internationale: WO 2018/130566

(56) Documents cités:
- EP-A1- 1 767 248
- EP-A2- 1 273 321
- US-A1- 2010 175 897

## Description

### Domaine technique

La présente invention se rapporte à une installation et à un procédé de mélange d'un liquide et d'un premier fluide, et plus précisément à une installation et un procédé destinés à répandre le mélange d'un liquide et d'un premier fluide.

### Etat de la technique

Des installations destinées à répandre le mélange d'un liquide et d'un premier fluide sont utilisées dans de nombreux domaines technologiques, comme par exemple dans le domaine de protection incendie par mousse, dans le domaine du traitement par des solutions désinfectantes ou encore le domaine des traitements agricoles. Le liquide et le premier fluide utilisés varient selon le domaine technologique d'application de ces installations.

Un exemple d'une installation destinée à répandre le mélange d'un liquide et d'un premier fluide appartenant au domaine de protection incendie par mousse est divulgué dans la demande de brevet FR2882523A1.

Cette demande de brevet divulgue un extincteur à eau portable pourvu d'une dose d'additif. Pendant l'utilisation de cet extincteur, il y a mélange d'un liquide (eau) avec un premier fluide (additif). Ce mélange résulte en la génération d'une mousse extinctrice qui est répandue par une lance de l'extincteur pendant son utilisation.

Plus en détail, comme décrit dans la demande de brevet FR2882523A1, l'extincteur à eau comprend un corps tubulaire comportant un goulot fermé par un bouchon, auquel est vissé le col d'une bouteille contenant du gaz carbonique sous pression. Une poignée commande une aiguille destinée à perforer un opercule du col, de manière à mettre l'intérieur de la bouteille en communication avec un tuyau. Le bouchon est par ailleurs solidaire d'un tube plongeur, dont le débouché se trouve au niveau du fond du corps tubulaire, tandis que ce tube communique avec une lance, par l'intermédiaire d'une conduite souple. Le tuyau se trouve en communication avec un organe de raccord, qui est lui-même fixé à un organe de réception d'une dose d'additif, destinée à être mélangée avec l'eau contenue dans le corps de l'extincteur.

En service, lorsque l'extincteur est mis en action de façon connue par manoeuvre de la poignée, le gaz carbonique présent dans la bouteille s'écoule, via un embout de l'organe de raccord, dans un canal traversant formé par des perçages ainsi que par un contre-alésage de l'organe de raccord. Ce gaz perfore alors un opercule de l'organe de réception obturant initialement un bouchon de l'organe de réception de manière à pénétrer dans le volume intérieur de cet organe de réception. Ce gaz carbonique déchire enfin le fond de l'organe de réception, de sorte que l'additif initialement présent dans l'organe de réception se trouve envoyé sous pression dans l'eau contenue par le corps de l'extincteur. Après utilisation, on doit changer l'organe de réception qui comprend la dose d'additif, en le désolidarisant de l'organe de raccord.

L'installation de la demande de brevet FR2882523A1 correspond à un extincteur à eau classique de type portable qui présente un volume limité et insuffisant dans le cas d'incendies importants. En outre, dans cette installation l'organe de réception présente également un volume limité. En conséquence, il est nécessaire de le changer plusieurs fois en le désolidarisant de l'organe de raccord. Par ailleurs, le mélange entre le liquide et le premier fluide n'est pas homogène.

Un autre exemple d'une installation destinée à répandre le mélange d'un liquide et d'un premier fluide appartenant au domaine de protection incendie par mousse est divulgué dans la demande de brevet GB2246294A.

Cette demande de brevet divulgue un système d'extinction d'incendie autonome (skid autonome) qui peut être monté sur chariot ou sur patin. Ce système comprend une source de gaz à haute pression qui est utilisée pour alimenter un moteur destiné à entraîner un ventilateur pour faire circuler un courant d'air à travers un générateur de mousse, lorsque le système est en service. En outre, ce système comprend un récipient sous pression contenant de l'eau et un réservoir contenant un concentré de mousse à haut foisonnement. Lorsque ce système est en service, le gaz est également utilisé pour forcer l'eau à travers un venturi où il entraîne le concentré de mousse à haut foisonnement pour former une solution de concentré de mousse qui est délivrée au générateur de mousse par l'intermédiaire d'une buse.

Ainsi, dans l'installation divulguée dans la demande de brevet GB2246294A, le mélange entre le liquide (eau) et le premier fluide (concentré de mousse à haut foisonnement) est effectué par l'utilisation du venturi. Ce mélange résulte à la génération d'une mousse qui est répandue par le générateur de mousse pendant l'utilisation de cette installation.

Cette installation appartient au domaine des skids présentant des dimensions importantes qui est différent du domaine des extincteurs à eau classiques de type portable présentant des dimensions limitées. Elle est exploitée par des professionnels de manière intensive dans le cas d'incendies importants.

Cependant, cette installation présente des pertes de charge importantes à cause de l'utilisation du système complexe de venturi ainsi que des problèmes d'étanchéité entre le récipient sous pression, le réservoir et les différents circuits intermédiaires. Par ailleurs, la demande de brevet GB2246294A ne divulgue pas un mélange homogène entre le liquide et le premier fluide. EP1 767 248 A1 décrit un extincteur comprenant une bouteille dans laquelle se trouve un agent extincteur de feu fluide.

EP 1 273 321 A2 décrit une installation qui utilise un système venturi et destinée à répandre le mélange d'un liquide ("water") et d'un premier fluide ("concentrate of foaming means").

US 2010/175897 A1 décrit une installation destinée à répandre le mélange d'un liquide ("water") et d'un premier fluide (" foam concentrate").

En conséquence, il reste intéressant de fournir une installation destinée à répandre le mélange d'un liquide et d'un premier fluide qui est compact, simple, facilement disponible, avec peu de pertes de charge et étanche, et qui présente un mélange homogène entre le liquide et le premier fluide.

### Exposé de l'invention

Pour cela, l'invention selon la revendication 1 propose une installation destinée à répandre le mélange d'un liquide et d'un premier fluide, comprenant :
- une cuve comprenant ou contenant le liquide,
- un réservoir destiné à stocker dans son espace intérieur le premier fluide, ledit réservoir étant enchâssé dans la cuve,
- un couvercle agencé pour fermer le réservoir, un moyen d'acheminement agencé de manière qu'il permette d'acheminer le premier fluide depuis le réservoir jusqu'à la cuve, et
- un moyen pour répandre le mélange du liquide et du premier fluide lorsque la pression dans la cuve dépasse un seuil de pression prédéterminé, ladite installation étant caractérisée en ce que :
   le couvercle comprenant une entrée agencée pour introduire dans le réservoir de l'air comprimé afin de mettre en pression l'espace intérieur du réservoir,
- et le moyen d'acheminement est conduit en col de cygne qui achemine le premier fluide depuis le réservoir jusqu'à la cuve lorsque l'espace intérieur du réservoir est mis sous pression après l'introduction d'air comprimé par l'entrée, afin que le liquide soit mélangé sous pression avec le premier fluide.

Le fait d'avoir le réservoir enchâssé dans la cuve résulte en une installation qui est compacte, simple et étanche. En outre, le fait d'avoir un moyen pour répandre le mélange du liquide et du premier fluide lorsque la pression dans la cuve dépasse un seuil de pression prédéterminé résulte en un mélange homogène entre le liquide et le premier fluide. Par ailleurs, l'installation de l'invention décrite ci-dessus n'a pas besoin d'utiliser un système de venturi pour mélanger le liquide et le premier fluide puisque ce mélange est effectué par l'acheminement du premier fluide depuis le réservoir jusqu'à la cuve. Ainsi, l'installation de l'invention présente peu de pertes de charge. En outre, le fait d'avoir un couvercle comprenant une entrée agencée pour introduire dans le réservoir de l'air comprimé afin de mettre en pression l'espace intérieur du réservoir, résulte à une installation qui est facilement disponible.

Selon des caractéristiques optionnelles ou des modes de réalisation particuliers de l'installation destinée à répandre le mélange d'un liquide et d'un premier fluide selon l'invention, mis en oeuvre seuls ou en combinaison entre elles/eux :
- l'installation comprend en outre au moins un conduit de recirculation situé sur au moins une paroi latérale de la cuve et configuré pour faire recirculer le mélange du liquide et du premier fluide au sein de la cuve ;
- le au moins un conduit de recirculation comporte un moyen de contrôle de recirculation dans le au moins un conduit de recirculation configuré pour arrêter la recirculation du mélange du liquide et du premier fluide lorsque la pression dans la cuve dépasse le seuil de pression prédéterminé ;
- le moyen de contrôle de recirculation dans le au moins un conduit de recirculation est une vanne ou un diaphragme ;
- le seuil de pression prédéterminé est compris entre 0,5MPa et 1MPa, et de préférence est égal à 0,7MPa ;
- l'installation comporte en outre :
   - au moins un réservoir supplémentaire destiné à stocker dans son espace intérieur un premier fluide supplémentaire, le réservoir supplémentaire étant enchâssé dans la cuve,
   - au moins un couvercle supplémentaire agencé pour fermer l'au moins un réservoir supplémentaire, l'au moins un couvercle supplémentaire comprenant au moins une entrée supplémentaire agencée pour introduire dans l'au moins un réservoir supplémentaire de l'air comprimé afin de mettre en pression l'espace intérieur de l'au moins un réservoir supplémentaire, et
   - au moins un moyen d'acheminement supplémentaire agencé de manière qu'il permette d'acheminer le premier fluide supplémentaire depuis l'au moins un réservoir supplémentaire jusqu'à la cuve lorsque l'espace intérieur de l'au moins un réservoir supplémentaire est mis sous pression après l'introduction d'air comprimé par l'au moins une entrée supplémentaire, afin que le liquide soit mélangé sous pression avec le premier fluide supplémentaire ;
   - le moyen pour répandre le mélange du liquide et du premier fluide est une vanne ou un diaphragme ;
   - le moyen d'acheminement est une vanne ou un diaphragme.

Par ailleurs, l'invention concerne un procédé destiné à répandre le mélange d'un liquide et d'un premier fluide mettant en oeuvre une installation telle que décrite ci-dessus, ledit procédé étant caractérisé en ce qu'il comprend :
- une première étape d'introduction dans le réservoir et éventuellement dans l'au moins un réservoir supplémentaire de l'air comprimé afin de mettre en pression l'espace intérieur du réservoir et éventuellement de l'au moins un réservoir supplémentaire et ainsi d'acheminer le premier fluide depuis le réservoir et éventuellement depuis l'au moins un réservoir supplémentaire jusqu'à la cuve, afin que le liquide compris dans la cuve soit mélangé avec le premier fluide, et
- une deuxième étape permettant de répandre le mélange du liquide et du premier fluide lorsque la pression dans la cuve dépasse un seuil de pression prédéterminé.

Selon des caractéristiques optionnelles ou des modes de réalisation particuliers du procédé destiné à répandre le mélange d'un liquide et d'un premier fluide selon l'invention, mis en oeuvre seuls ou en combinaison entre elles/eux :
- le mélange du liquide et du premier fluide est recirculé au sein de la cuve ;
- la recirculation du mélange du liquide et du premier fluide au sein de la cuve est arrêtée lorsque la pression dans la cuve dépasse le seuil de pression prédéterminé ;
- le seuil de pression prédéterminé est compris entre 0,5MPa et 1MPa, et de préférence est égal à 0,7MPa.

### Brève description des figures

L'invention sera mieux comprise à la lecture de la description qui suit, faite uniquement à titre d'exemple, et en référence aux figures en annexe dans lesquelles :
- La figure 1 illustre une vue en coupe longitudinale d'une installation destinée à répandre le mélange d'un liquide et d'un premier fluide selon un mode de réalisation de l'invention ;
- La figure 2 illustre une vue en coupe longitudinale d'une installation destinée à répandre le mélange d'un liquide et d'un premier fluide selon un autre mode de réalisation de l'invention avec un conduit de recirculation.

### Modes de réalisation

Ces modes de réalisation de l'installation et procédé destinés à répandre le mélange d'un liquide et d'un premier fluide n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

L'installation destinée à répandre le mélange d'un liquide et d'un premier fluide selon l'invention peut être utilisée dans de nombreux domaines technologiques, comme par exemple dans le domaine de protection incendie par mousse, dans le domaine du traitement par des solutions désinfectantes ou encore le domaine des traitements agricoles.

Les modes de réalisation présentés ci-dessous concernent une installation destinée à répandre le mélange d'un liquide et d'un premier fluide appartenant au domaine de protection incendie par mousse et en particulier correspondant à une installation de protection incendie par mousse, mais ils peuvent parfaitement être transposés dans d'autres domaines comme celui du traitement par des solutions désinfectantes ou encore le domaine des traitements agricoles.

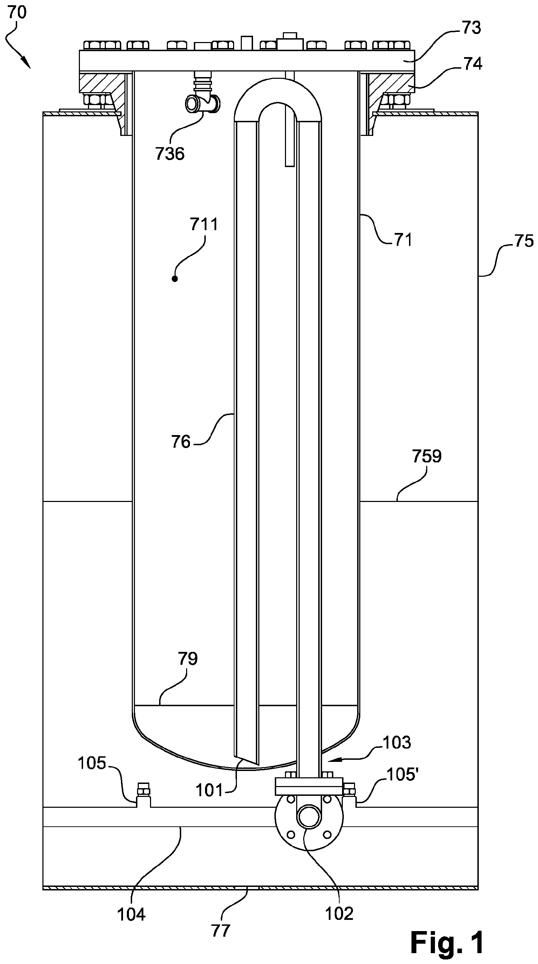

La figure 1 montre une installation de protection incendie par mousse. La figure 1 montre un premier mode de réalisation de cette installation.

Cette installation 70 est du type comprenant un réservoir 71 destiné à stocker un premier fluide 79 dans un espace intérieur 711 de ce réservoir 71.

Cette installation comprend une cuve 75 dans laquelle est enchâssé le réservoir 71. Le fait d'avoir le réservoir 71 enchâssé dans la cuve 75 résulte en une installation 70 qui est compacte, simple et étanche.

La cuve 75 a typiquement une capacité de 12000 litres et contient ou comprend un liquide 759 tel que de l'eau.

Le réservoir 71, appelé réservoir d'émulseur, a typiquement une capacité de 300 litres et le premier fluide 79 qu'il contient est un produit moussant tel qu'un émulseur synthétique multi foisonnement filmogène (A3F ou AFF). Dans un autre exemple, le premier fluide 79 est un produit retardant et dans ce cas-là le réservoir 71 est appelé réservoir de retardant.

Cette installation comprend en outre un couvercle 73 agencé pour fermer le réservoir 71. Le couvercle 73 comprend une entrée 736 agencée pour introduire dans le réservoir 71 de l'air comprimé. De cette manière, l'espace intérieur 711 du réservoir 71 est mis en pression. Par ailleurs, une bride de fixation 74 est agencée pour fixer le couvercle 73 au réservoir 71. La bride 74 est typiquement enchâssée puis soudée sur le réservoir 71. Dans l'exemple de l'installation 70 de la figure 1, on utilise vingt vis-écrous ayant un filetage M30 auxquels on applique un couple de serrage de 308 Nm. Ces vis-écrous servent à fixer le couvercle 73 au réservoir 71 et à la cuve 75.

L'installation 70 de la figure 1 comprend en outre un moyen d'acheminement agencé de manière qu'il permette d'acheminer le premier fluide 79 depuis le réservoir 71 jusqu'à la cuve 75 lorsque l'espace intérieur 711 du réservoir 71 est mis sous pression après l'introduction d'air comprimé par l'entrée 736, afin que le liquide 759 soit mélangé sous pression avec le premier fluide 79.

En particulier, dans l'installation de la figure 1, le moyen d'acheminement est un conduit 76 en col de cygne et le premier fluide 79 est un produit moussant.

Ce conduit 76 en col de cygne permet d'acheminer le produit moussant depuis le réservoir 71 jusqu'à la cuve 75 lorsque l'espace intérieur 711 du réservoir 71 est mis sous pression après introduction d'air comprimé par l'entrée 736. Un système de pressurisation non illustré dans les figures est agencé pour introduire d'air comprimé par l'entrée 736. Selon un exemple, ce système de pressurisation est un réservoir d'air comprimé qui est connecté avec l'entrée 736 afin d'introduire l'air comprimé dans l'espace intérieur 711 du réservoir 71 par cette entrée 736. D'autres systèmes de pressurisation connus de l'homme du métier et adaptés pour introduire de l'air comprimé dans l'espace intérieur 711 du réservoir 71 par l'entrée 736 peuvent être utilisés au lieu du réservoir d'air comprimé.

Comme illustré dans la figure 1, le conduit 76 comporte une entrée 101 disposée approximativement au fond du réservoir 71 et une sortie 102 s'étendant au-dessous du fond du réservoir 71. Ce conduit 76 traverse le réservoir 71 à travers un orifice 103 réalisé sur le fond du réservoir 71. Cet orifice 103 présente un diamètre correspondant au diamètre du conduit 76.

Selon un exemple avantageux illustré dans la figure 1, afin d'améliorer le mélange entre le liquide 759 et le premier fluide 79, le premier fluide 79 déchargé de la sortie 102 lorsque l'espace intérieur 711 du réservoir 71 est mis sous pression est guidé dans un conduit de diffusion 104 disposé au-dessous du fond du réservoir 71 au niveau de la sortie 102 à la partie inférieure de la cuve 75. Ce conduit de diffusion 104 s'étend transversalement entre les deux parois latérales opposées et verticalement orientées de la cuve 75 et comprend un moyen de diffusion à partir duquel le premier fluide 79 est diffusé au sein de la cuve 75. Dans l'exemple de la figure 1, le moyen de diffusion comporte deux buses 105 et 105' disposées sur le conduit de diffusion 104. Dans un autre exemple non illustré dans les figures, une seule buse ou plus de deux buses peuvent être utilisées. En outre, dans un autre exemple, le moyen de diffusion comporte des orifices formés sur la surface du conduit de diffusion 104, à partir desquels le premier fluide 79 est diffusé au sein de la cuve 75. Comme illustré dans la figure 1, selon un exemple la sortie 102 est fixée au conduit de diffusion 104 par des moyens de fixation de type vis-écrou.

Selon un autre exemple non illustré dans les figures, le conduit de diffusion 104 n'est pas utilisé et le premier fluide 79 est diffusé à partir de la sortie 102 du conduit 76 en col de cygne directement au sein de la cuve 75 dans la masse du liquide 759.

Selon un autre exemple non illustré dans les figures, le moyen d'acheminement peut être un diaphragme ou une vanne disposé au fond du réservoir 71. Ce diaphragme ou cette vanne peuvent être configurés de manière à s'ouvrir lorsque la pression dans le réservoir 71 dépasse un seuil de pression prédéterminé. Selon un exemple, ce seuil de pression prédéterminé est compris entre 0,5MPa et 1MPa, et de préférence est égal à 0,7MPa.

L'installation 70 de la figure 1 comprend en outre un moyen pour répandre le mélange du liquide 759 et du premier fluide 79 lorsque la pression dans la cuve 75 dépasse un seuil de pression prédéterminé.

Typiquement, lorsque la pression dans la cuve 75 dépasse un seuil de pression prédéterminé, par exemple 0,7MPa, une vanne 77 est ouverte pour répandre le mélange d'eau et de produit moussant sur un incendie. On voit que la pressurisation du réservoir 71 se traduit par une pressurisation consécutive de la cuve 75 par l'intermédiaire du conduit 76. Ainsi, dans cet exemple illustré dans la figure 1, le moyen pour répandre le mélange du liquide 759 (eau) et du premier fluide 79 (produit moussant) est une vanne 77 situé au fond de la cuve 75.

Selon un autre exemple non illustré dans les figures, le moyen pour répandre le mélange du liquide 759 et du premier fluide 79 est un diaphragme.

En outre, selon un autre exemple ce seuil de pression prédéterminé est compris entre 0,5MPa et 1MPa, et de préférence est égal à 0,7MPa comme mentionné dans l'exemple ci-dessus.

Le fait d'avoir un moyen pour répandre le mélange du liquide 759 et du premier fluide 79 lorsque la pression dans la cuve 75 dépasse un seuil de pression prédéterminé résulte en un mélange homogène entre le liquide 759 et le premier fluide 79 et donc à la génération d'une mousse homogène qui est efficace pour faire face aux incendies.

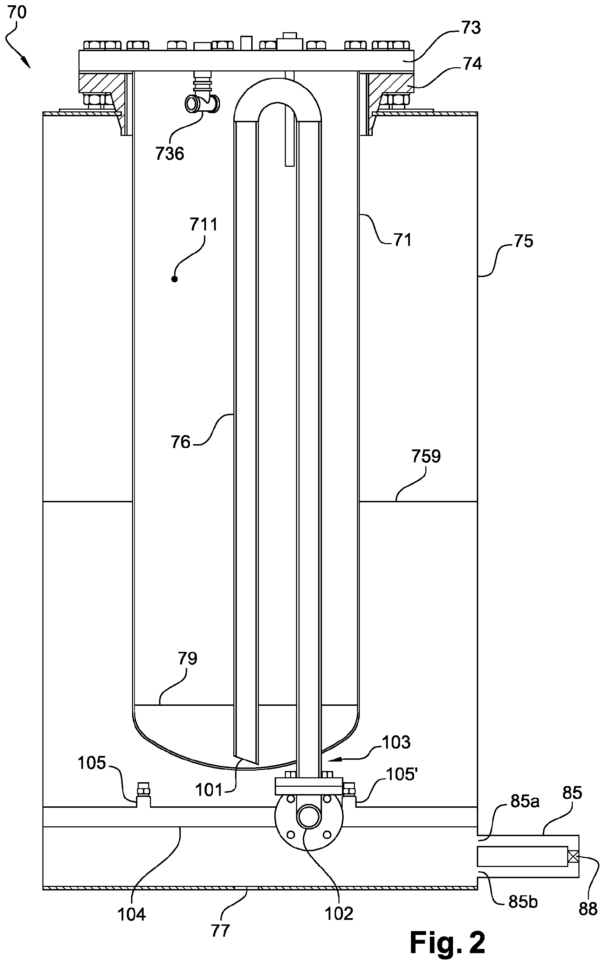

Il est maintenant décrit un deuxième mode de réalisation de l'installation 70, tel que représenté sur la figure 2, mais uniquement pour ses différences avec le premier mode de réalisation de la figure 1.

En particulier, le mode de réalisation de la figure 2 diffère du mode de réalisation de la figure 1 en ce que l'installation 70 de la figure 2 comprend en outre au moins un conduit de recirculation 85. Ce conduit de recirculation 85 est situé sur au moins une paroi latérale de la cuve 75 et est configuré pour faire recirculer le mélange du liquide 759 et du premier fluide 79 au sein de la cuve 75. Cette recirculation améliore l'homogénéité du mélange du liquide 759 et du premier fluide 79 au sein de la cuve 75.

Plus en détail, selon l'exemple de la figure 2, un seul conduit de recirculation 85 est situé entre le fond de la cuve 75 et le conduit de diffusion 104. Le conduit de recirculation 85 comprend un conduit de section en « n » avec une entrée 85a et une sortie 85b sur cette paroi latérale de la cuve 75. Selon un exemple, l'entrée 85a est située à une distance de 10 cm du conduit de diffusion 104 et la sortie 85b est située à une distance de 10cm du fond de la cuve 75. Selon un autre exemple, le conduit de recirculation 85 comprend un conduit de section en « U ».

En outre, selon un autre exemple non illustré dans les figures, l'entrée 85a est située sur une première paroi latérale de la cuve 75 et la sortie 85b est située sur une deuxième paroi latérale de la cuve 75 opposée à la première paroi latérale.

Par ailleurs, selon un autre exemple non illustré dans les figures, deux conduits de recirculation 85 situés entre le fond de la cuve 75 et le conduit de diffusion 104 peuvent être situés de manière symétrique et opposée respectivement sur la première et la deuxième paroi latérale de la cuve 75.

Dans un autre exemple, non illustré dans les figures, plus de deux conduits de recirculation 85 peuvent être situés sur au moins une paroi latérale de la cuve 75 pour gagner en temps de mise en oeuvre de l'installation 70 et pour améliorer le mélange du liquide 759 et du premier fluide 79 au sein de la cuve 75.

Avantageusement, selon un exemple, le conduit de recirculation 85 comporte un moyen de contrôle de recirculation dans le conduit de recirculation 85 configuré pour arrêter la recirculation du mélange du liquide 759 et du premier fluide 79 lorsque la pression dans la cuve 75 dépasse un seuil de pression prédéterminé.

Dans l'exemple de la figure 2, ce moyen de contrôle de recirculation est une vanne 88 située de manière illustrative au milieu du conduit de recirculation 85.

Dans un autre exemple non illustré dans les figures, ce moyen de contrôle de recirculation est un diaphragme.

Dans l'exemple de la figure 2, la vanne 88 est adaptée pour se fermer lorsque la pression dans la cuve 75 dépasse un seuil de pression prédéterminé, par exemple égal à 0,7MPa, afin d'arrêter la recirculation du mélange du liquide 759 et du premier fluide 79. Ce seuil de pression prédéterminé est égal au seuil de pression prédéterminé correspondant à l'ouverture de la vanne 77 située au fond de la cuve 75 pour répandre le mélange du liquide 759 et du premier fluide 79 sur un incendie. Ainsi, lorsque la vanne 88 se ferme, la vanne 77 s'ouvre. Un tuyau non illustré dans les figures peut être connecté avec la vanne 77 afin de diffuser le mélange du liquide 759 et du premier fluide 79 sur un incendie.

Selon un autre exemple, le seuil de pression prédéterminé est compris entre 0,5MPa et 1MPa, et de préférence est égal à 0,7MPa comme mentionné dans l'exemple ci-dessus.

Dans un autre exemple non illustré dans les figures, l'installation 70 comporte :
- au moins un réservoir 71 supplémentaire, dit réservoir d'émulseur ou de retardant supplémentaire, destiné à stocker dans son espace intérieur 711 un premier fluide 79 supplémentaire, le réservoir 71 supplémentaire étant enchâssé dans la cuve 75,
- au moins un couvercle 73 supplémentaire agencé pour fermer l'au moins un réservoir 71 supplémentaire, l'au moins un couvercle 73 supplémentaire comprenant au moins une entrée 736 supplémentaire agencée pour introduire dans l'au moins un réservoir 71 supplémentaire de l'air comprimé afin de mettre en pression l'espace intérieur 711 de l'au moins un réservoir 71 supplémentaire, et
- au moins un moyen d'acheminement supplémentaire agencé de manière qu'il permette d'acheminer le premier fluide 79 supplémentaire depuis l'au moins un réservoir 71 supplémentaire jusqu'à la cuve 75 lorsque l'espace intérieur de l'au moins un réservoir 71 supplémentaire est mis sous pression après l'introduction d'air comprimé par l'au moins une entrée 736 supplémentaire, afin que le liquide 759 soit mélangé sous pression avec le premier fluide 79 supplémentaire.

L'avantage d'avoir au moins un réservoir 71 supplémentaire lié avec au moins un couvercle 73 supplémentaire et au moins un moyen d'acheminement supplémentaire tels que décrits ci-dessous, est d'améliorer l'efficacité et la fiabilité fonctionnelle de l'installation 70 ainsi que de faciliter l'entretien et la rapidité de remise en service.

Selon un deuxième aspect de l'invention, il est proposé un procédé destiné à répandre le mélange du liquide 759 et du premier fluide 79 mettant en oeuvre l'installation 70. Ce procédé comprend :
- une première étape d'introduction dans le réservoir 71 et éventuellement dans l'au moins un réservoir 71 supplémentaire de l'air comprimé afin de mettre en pression l'espace intérieur 711 du réservoir 71 et éventuellement de l'au moins un réservoir 71 supplémentaire et ainsi d'acheminer le premier fluide 79 depuis le réservoir 71 et éventuellement depuis l'au moins un réservoir 71 supplémentaire jusqu'à la cuve 75, afin que le liquide 759 compris dans la cuve 75 soit mélangé avec le premier fluide 79, et
- une deuxième étape permettant de répandre le mélange du liquide 759 et du premier fluide 79 lorsque la pression dans la cuve 75 dépasse un seuil de pression prédéterminé.

Les modes de réalisation présentés ci-dessus concernent une installation destinée à répandre le mélange d'un liquide 759 et d'un premier fluide 79 appartenant au domaine de protection incendie par mousse mais ils peuvent parfaitement être transposés dans d'autres domaines comme par exemple celui du traitement par des solutions désinfectantes ou encore le domaine des traitements agricoles. Le liquide 759 et le premier fluide 79 utilisés peuvent varier selon le domaine technologique d'application de ces installations.

Selon un exemple, dans le domaine du traitement par des solutions désinfectantes, le liquide 759 est de l'eau et le premier fluide 79 est de l'eau de javel. Selon un autre exemple, dans le domaine des traitements agricoles, le liquide 759 est un engrais liquide ou un produit phytosanitaire sous forme liquide et le premier fluide 79 est de l'eau.

De préférence, la cuve 75, le réservoir 71 et le couvercle 73 sont fabriquées en métal. Selon un exemple, ce métal peut être de l'acier conventionnel, de l'acier inoxydable ou de l'acier noir. Le métal de fabrication est choisi par rapport aux pressions appliquées dans le réservoir 71 et dans la cuve 75 ainsi que par rapport aux liquide 759 et le premier fluide 79 utilisés.

## Revendications

1. Installation (70) destinée à répandre le mélange d'un liquide (759) et d'un premier fluide (79), comprenant :
- une cuve (75) comprenant le liquide (759),
- un réservoir (71) destiné à stocker dans son espace intérieur (711) le premier fluide (79), ledit réservoir (71) étant enchâssé dans la cuve (75),
- un couvercle (73) agencé pour fermer le réservoir (71),
- un moyen d'acheminement agencé de manière qu'il permette d'acheminer le premier fluide (79) depuis le réservoir (71) jusqu'à la cuve (75), et
- un moyen pour répandre le mélange du liquide (759) et du premier fluide (79) lorsque la pression dans la cuve (75) dépasse un seuil de pression prédéterminé, ladite installation étant **caractérisée en ce que** :
- le couvercle (73) comprend une entrée (736) agencée pour introduire dans le réservoir (71) de l'air comprimé afin de mettre en pression l'espace intérieur (711) du réservoir (71)
- et le moyen d'acheminement est un conduit (76) en col de cygne qui achemine le premier fluide (79) depuis le réservoir (71) jusqu'à la cuve (75) lorsque l'espace intérieur (711) du réservoir (71) est mis sous pression après introduction d'air comprimé par l'entrée (736), afin que le liquide (759) soit mélangé sous pression avec le premier fluide (79).

2. Installation selon la revendication 1, comprenant en outre au moins un conduit de recirculation (85) situé sur au moins une paroi latérale de la cuve (75) et configuré pour faire recirculer le mélange du liquide (759) et du premier fluide (79) au sein de la cuve (75).

3. Installation selon la revendication 2, dans laquelle le au moins un conduit de recirculation (85) comporte un moyen de contrôle de recirculation dans le au moins un conduit de recirculation (85) configuré pour arrêter la recirculation du mélange du liquide (759) et du premier fluide (79) lorsque la pression dans la cuve (75) dépasse le seuil de pression prédéterminé.

4. Installation selon l'une quelconque des revendications précédentes, dans laquelle le moyen de contrôle de recirculation dans le au moins un conduit de recirculation (85) est une vanne (88) ou un diaphragme.

5. Installation selon l'une quelconque des revendications précédentes, dans laquelle le seuil de pression prédéterminé est compris entre 0,5MPa et 1MPa, et de préférence est égal à 0,7MPa.

6. Installation selon l'une quelconque des revendications précédentes, comportant en outre :
- au moins un réservoir (71) supplémentaire destiné à stocker dans son espace intérieur (711) un premier fluide (79) supplémentaire, le réservoir (71) supplémentaire étant enchâssé dans la cuve (75),
- au moins un couvercle (73) supplémentaire agencé pour fermer l'au moins un réservoir (71) supplémentaire, l'au moins un couvercle (73) supplémentaire comprenant au moins une entrée (736) supplémentaire agencée pour introduire dans l'au moins un réservoir (71) supplémentaire de l'air comprimé afin de mettre en pression l'espace intérieur (711) de l'au moins un réservoir (71) supplémentaire, et
- au moins un moyen d'acheminement supplémentaire agencé de manière qu'il permette d'acheminer le premier fluide (79) supplémentaire depuis l'au moins un réservoir (71) supplémentaire jusqu'à la cuve (75) lorsque l'espace intérieur de l'au moins un réservoir (71) supplémentaire est mis sous pression après l'introduction d'air comprimé par l'au moins une entrée (736) supplémentaire, afin que le liquide (759) soit mélangé sous pression avec le premier fluide (79) supplémentaire.

7. Installation selon l'une quelconque des revendications précédentes, dans laquelle le moyen pour répandre le mélange du liquide (759) et du premier fluide (79) est une vanne (77) ou un diaphragme.

8. Installation selon l'une quelconque des revendications 1 à 6, dans laquelle le moyen d'acheminement est une vanne (88) ou un diaphragme.

9. Procédé destiné à répandre le mélange d'un liquide (759) et d'un premier fluide (79) mettant en oeuvre une installation (70) selon l'une quelconque des revendications précédentes, ledit procédé étant **caractérisé en ce qu'**il comprend :
- une première étape d'introduction dans le réservoir (71) et éventuellement dans l'au moins un réservoir (71) supplémentaire de l'air comprimé afin de mettre en pression l'espace intérieur (711) du réservoir (71) et éventuellement de l'au moins un réservoir (71) supplémentaire et ainsi d'acheminer le premier fluide (79) depuis le réservoir (71) et éventuellement depuis l'au moins un réservoir (71) supplémentaire jusqu'à la cuve (75), afin que le liquide (759) compris dans la cuve (75) soit mélangé avec le premier fluide (79), et
- une deuxième étape permettant de répandre le mélange du liquide (759) et du premier fluide (79) lorsque la pression dans la cuve (75) dépasse un seuil de pression prédéterminé.

10. Procédé selon la revendication 9, dans lequel le mélange du liquide (759) et du premier fluide (79) est recirculé au sein de la cuve (75).

11. Procédé selon la revendication 10, dans lequel la recirculation du mélange du liquide (759) et du premier fluide (79) au sein de la cuve (75) est arrêtée lorsque la pression dans la cuve (75) dépasse le seuil de pression prédéterminé.

12. Procédé selon l'une quelconque des revendications 9 à 11, dans lequel le seuil de pression prédéterminé est compris entre 0,5MPa et 1MPa, et de préférence est égal à 0,7MPa.

## Patentansprüche

1. Anlage (70), die dafür bestimmt ist, das Gemisch einer Flüssigkeit (759) und eines ersten Fluids (79) zu verteilen, umfassend:
- einen Tank (75), der die Flüssigkeit (759) enthält,
- einen Behälter (71), der dafür bestimmt ist, in seinem Innenraum (711) das erste Fluid (79) zu speichern, wobei der Behälter (71) in den Tank (75) eingelassen ist,
- einen Deckel (73), der dafür angeordnet ist, den Behälter (71) zu verschließen,
- ein Beförderungsmittel, das so angeordnet ist, dass es ermöglicht, das erste Fluid (79) vom Behälter (71) bis zum Tank (75) zu befördern, und
- ein Mittel, um das Gemisch der Flüssigkeit (759) und des ersten Fluids (79) zu verteilen, wenn der Druck im Tank (75) eine vorbestimmte Druckschwelle überschreitet, wobei die Anlage **dadurch gekennzeichnet ist, dass**:
- der Deckel (73) einen Einlass (736) umfasst, der dafür angeordnet ist, Druckluft in den Behälter (71) einzuleiten, um den Innenraum (711) des Behälters (71) unter Druck zu setzen,
- und das Beförderungsmittel eine Schwanenhalsleitung (76) ist, die das erste Fluid (79) vom Behälter (71) bis zum Tank (75) befördert, wenn der Innenraum (711) des Behälters (71) nach dem Einleiten von Druckluft durch den Einlass (736) unter Druck gesetzt wurde, damit die Flüssigkeit (759) unter Druck mit dem ersten Fluid (79) gemischt wird.

2. Anlage nach Anspruch 1, die weiter mindestens eine Umwälzleitung (85) umfasst, die sich an mindestens einer Seitenwand des Tanks (75) befindet und dafür konfiguriert ist, das Gemisch der Flüssigkeit (759) und des ersten Fluids (79) innerhalb des Tanks (75) umzuwälzen.

3. Anlage nach Anspruch 2, wobei die mindestens eine Umwälzleitung (85) ein Mittel zum Steuern der Umwälzung in der mindestens einen Umwälzleitung (85) umfasst, das dafür konfiguriert ist, die Umwälzung des Gemisches der Flüssigkeit (759) und des ersten Fluids (79) zu stoppen, wenn der Druck im Tank (75) die vorbestimmte Druckschwelle überschreitet.

4. Anlage nach einem der vorstehenden Ansprüche, wobei das Mittel zum Steuern der Umwälzung in der mindestens einen Umwälzleitung (85) ein Ventil (88) oder eine Membran ist.

5. Anlage nach einem der vorstehenden Ansprüche, wobei die vorbestimmte Druckschwelle im Bereich zwischen 0,5 MPa und 1 MPa liegt und bevorzugt gleich 0,7 MPa ist.

6. Anlage nach einem der vorstehenden Ansprüche, die weiter umfasst:
- mindestens einen zusätzlichen Behälter (71), der dafür bestimmt ist, in seinem Innenraum (711) ein zusätzliches erstes Fluid (79) zu speichern, wobei der zusätzliche Behälter (71) in den Tank (75) eingelassen ist,
- mindestens einen zusätzlichen Deckel (73), der dafür angeordnet ist, den mindestens einen zusätzlichen Behälter (71) zu verschließen, wobei der mindestens eine zusätzliche Deckel (73) mindestens einen zusätzlichen Einlass (736) umfasst, der dafür angeordnet ist, Druckluft in den mindestens einen zusätzlichen Behälter (71) einzuleiten, um den Innenraum (711) des mindestens einen zusätzlichen Behälters (71) unter Druck zu setzen, und
- mindestens ein zusätzliches Beförderungsmittel, das so angeordnet ist, dass es ermöglicht, das zusätzliche erste Fluid (79) von dem mindestens einen zusätzlichen Behälter (71) bis zum Tank (75) zu befördern, wenn der Innenraum des mindestens einen zusätzlichen Behälters (71) nach dem Einleiten von Druckluft durch den mindestens einen zusätzlichen Einlass (736) unter Druck gesetzt wurde, damit die Flüssigkeit (759) unter Druck mit dem zusätzlichen ersten Fluid (79) gemischt wird.

7. Anlage nach einem der vorstehenden Ansprüche, wobei das Mittel zum Verteilen des Gemischs der Flüssigkeit (759) und des ersten Fluids (79) ein Ventil (77) oder eine Membran ist.

8. Anlage nach einem der Ansprüche 1 bis 6, wobei das Beförderungsmittel ein Ventil (88) oder eine Membran ist.

9. Verfahren, das dafür bestimmt ist, unter Einsatz einer Anlage (70) nach einem der vorstehenden Ansprüche das Gemisch einer Flüssigkeit (759) und eines ersten Fluids (79) zu verteilen, wobei das Verfahren **dadurch gekennzeichnet ist, dass** es umfasst:
- einen ersten Schritt des Einleitens von Druckluft in den Behälter (71) und gegebenenfalls in den mindestens einen zusätzlichen Behälter (71), um den Innenraum (711) des Behälters (71) und gegebenenfalls des mindestens einen zusätzlichen Behälters (71) unter Druck zu setzen und dadurch das erste Fluid (79) vom Behälter (71) und gegebenenfalls dem mindestens einen zusätzlichen Behälter (71) bis zum Tank (75) zu befördern, damit die im Tank (75) enthaltene Flüssigkeit (759) mit dem ersten Fluid (79) gemischt wird, und
- einen zweiten Schritt, der es ermöglicht, das Gemisch der Flüssigkeit (759) und des ersten Fluids (79) zu verteilen, wenn der Druck im Tank (75) eine vorbestimmte Druckschwelle überschreitet.

10. Verfahren nach Anspruch 9, wobei das Gemisch der Flüssigkeit (759) und des ersten Fluids (79) innerhalb des Tanks (75) umgewälzt wird.

11. Verfahren nach Anspruch 10, wobei die Umwälzung des Gemischs der Flüssigkeit (759) und des ersten Fluids (79) innerhalb des Tanks (75) gestoppt wird, wenn der Druck im Tank (75) die vorbestimmte Druckschwelle überschreitet.

12. Verfahren nach einem der Ansprüche 9 bis 11, wobei die vorbestimmte Druckschwelle im Bereich zwischen 0,5 MPa und 1 MPa liegt und bevorzugt gleich 0,7 MPa ist.

## Claims

1. Installation (70) for spreading the mixture of a liquid (759) and a first fluid (79), comprising:
- a vessel (75) comprising the liquid (759),
- a tank (71) for storing in its interior space (711) the first fluid (79), said tank (71) being encased in the vessel (75),
- a cover (73) arranged to close the tank (71),
- a delivery means arranged such that it allows the delivery of the first fluid (79) from the tank (71) to the vessel (75), and
- a means for spreading the mixture of the liquid (759) and the first fluid (79) when the pressure in the vessel (75) exceeds a predetermined pressure threshold, said installation being **characterized in that**:
- the cover (73) comprises an inlet (736) arranged to introduce into the tank (71) compressed air in order to pressurise the interior space (711) of the tank (71),
- and the delivery means is a conduit (76) in the form of a gooseneck which delivers the first fluid (79) from the tank (71) to the vessel (75) when the interior space (711) of the tank (71) is pressurised after the introduction of compressed air through the inlet (736) in order that the liquid (759) is mixed under pressure with the first fluid (79).

2. Installation according to claim 1, further comprising at least one recirculation conduit (85) located on at least one side wall of the vessel (75) and configured to recirculate the mixture of the liquid (759) and the first fluid (79) within the vessel (75).

3. Installation according to claim 2, wherein the at least one recirculation conduit (85) includes a recirculation control means in the at least one recirculation conduit (85) configured to stop the recirculation of the mixture of the liquid (759) and the first fluid (79) when the pressure in the vessel (75) exceeds the predetermined pressure threshold.

4. Installation according to any one of the preceding claims, wherein the recirculation control means in the at least one recirculation conduit (85) is a valve (88) or a diaphragm.

5. Installation according to any one of the preceding claims, wherein the predetermined pressure threshold is between 0.5MPa and 1 MPa and is preferably equal to 0.7MPa.

6. Installation according to any one of the preceding claims, further including:
- at least one additional tank (71) intended to store in its interior space (711) a first additional fluid (79), the additional tank (71) being encased in the vessel (75),
- at least one additional cover (73) arranged to close the at least one additional tank (71), the at least one additional cover (73) comprising at least one additional inlet (736) arranged for introduction into the at least one additional tank (71) of compressed air in order to pressurise the interior space (711) of the at least one additional tank (71), and
- at least one additional delivery means arranged to allow the delivery of the first additional fluid (79) from the at least one additional tank (71) to the vessel (75) when the interior space of the at least one additional tank (71) is pressurised following the introduction of compressed air through the at least one additional inlet (736), so that the liquid (759) is mixed under pressure with the first additional fluid (79).

7. Installation according to any one of the preceding claims, wherein the means for spreading the mixture of the liquid (759) and the first fluid (79) is a valve (77) or a diaphragm.

8. Installation according to any one of claims 1 to 6, wherein the delivery means is a valve (88) or a diaphragm.

9. Method for spreading the mixture of a liquid (759) and a first fluid (79) using an installation (70) according to any one of the preceding claims, said method being **characterized in that** it comprises:
- a first step of introducing compressed air into the tank (71) and possibly into the at least one additional tank (71) in order to pressurise the interior space (711) of the tank (71) and possibly of the at least one additional tank (71) and thus to convey the first fluid (79) from the tank (71) and possibly from the at least one additional tank (71) to the vessel (75), so that the liquid (759) in the vessel (75) is mixed with the first fluid (79), and
- a second step allowing the mixture of the liquid (759) and the first fluid (79) to be spread when the pressure in the vessel (75) exceeds a predetermined pressure threshold.

10. Method according to claim 9, wherein the mixture of the liquid (759) and the first fluid (79) is recirculated within the vessel (75).

11. Method according to claim 10, wherein the recirculation of the mixture of the liquid (759) and the first fluid (79) within the vessel (75) is stopped when the pressure in the vessel (75) exceeds the predetermined pressure threshold.

12. Method according to any one of claims 9 to 11, wherein the predetermined pressure threshold is between 0.5 MPa and 1 MPa and is preferably equal to 0.7 MPa.
